# EUROPEAN PATENT APPLICATION

(11) **EP 1 544 562 A2**
(43) Date of publication of application: **22.06.2005**
(21) Application number: 04029842.4
(22) Date of filing: 16.12.2004
(51) Int. Cl.: F28D 20/00

(54) **Thermal Storage unit and methods for using the same to heat a fluid**

(30) Priority: 16.12.2003 US 738825; 17.09.2004 US 943293
(71) Applicant: Active Power, Inc., Austin; TX 78758 (US)
(72) Inventor: Hudson, Robert S., Austin, Texas 78727 (US); Perkins, David E., Austin, Texas 78731 (US); Hudson, Donald M., Austin, Texas 78746 (US); Beatty, David J., Austin, Texas 78727 (US); Stamets, Donald L., Cedar Park, Texas 78613 (US); Pinkerton, Joseph F., Austin, Texas 78703 (US)
(74) Representative: VOSSIUS & PARTNER

(57) **Abstract**

A thermal storage unit (100) having at least one annular flow channel formed between an inner and outer member is provided. The thermal storage unit (100) uses conventional mill products to create annular flow channels (115) that are coupled to each other via transverse channels for allowing various fluid routing arrangements and piping connections, and that economically maximize the surface area of flow in contact with the thermal mass included in the inner and outer members.

## Description

This application is a continuation-in-part of U.S. patent application No. 10/738,825, filed December 16, 2003.

This invention relates to thermal storage units (TSUs). More particularly, this invention relates to TSUs that provide sensible heat thermal energy storage and delivery in a way that increases efficiency and reduces costs compared to known TSUs.

TSUs are well known and are often used in power delivery systems, such as compressed air storage (CAS) systems and thermal and compressed air storage (TACAS) systems. Such systems, often used to provide an available source of electrical power, often use compressed air to drive a turbine which powers an electrical generator.

In TACAS systems, it is desirable to heat the compressed air prior to reaching the inlet port of the turbine. It is known that heated air, as opposed to ambient or cool air, enables the turbine to operate more efficiently. Therefore, a mechanism or system is needed to heat the air before providing it to the turbine. One approach is to use a suitable type of fuel-combustion system. Another approach is to use a TSU. While fuel-combustion systems usually emit polluting gases, TSUs may be preferable over fuel-combustion systems at least because they are not associated with such harmful emissions.

Although TSUs may offer advantages over fuel-combustion systems, existing TSUs have several shortcomings, as discussed below.

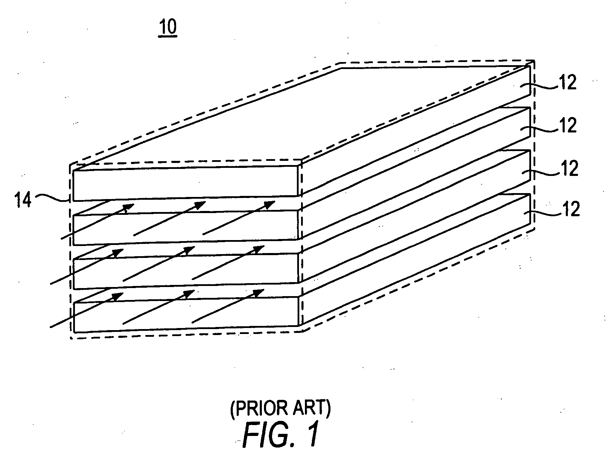

One known configuration of a TSU is shown in FIG. 1. TSU 10 of FIG. 1 includes heated parallel plates 12 contained within housing 14 to create channels through which compressed air may flow. The heat transfer area and the gap between plates 12 may be adjusted for optimum heat transfer conditions. Such a TSU, however, is not optimally suited for high pressure operation as these plates do not provide optimum pressure containment for the compressed air, and instead result in leakage flow between plates 12 and housing 14.

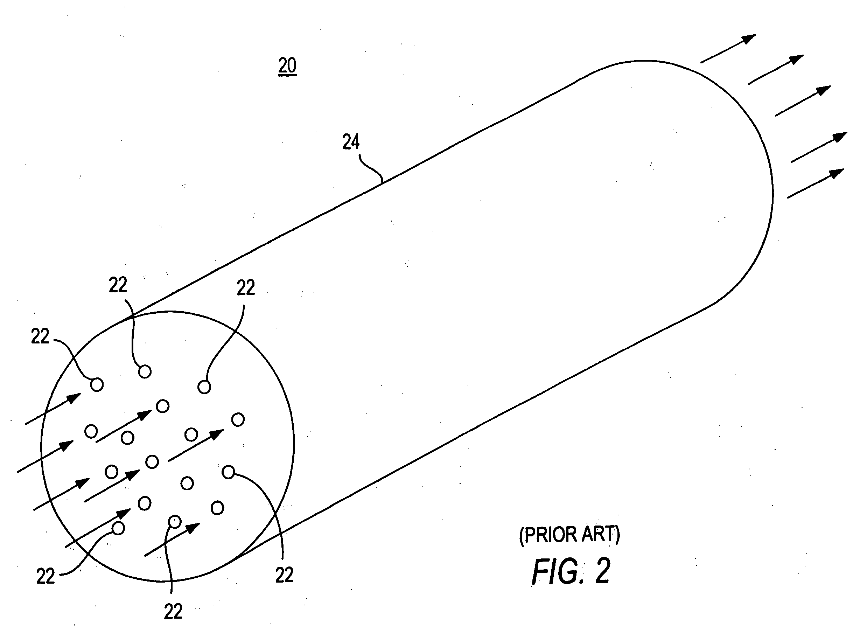

Another known TSU uses tube flow through elongated cavities embedded in a solid medium. As shown in FIG. 2, compressed air travels through through-holes 22, which are bored out of bar 24. Although tube flow, as provided by TSU 20 of FIG. 2, may provide more desirable pressure containment compared to channel flow TSU 10 of FIG. 1, it involves high fabrication costs. This is because it is usually costly to drill a plurality of small-diameter holes that extend throughout the entire length of a solid medium.

Therefore, it can be seen that the TSUs shown in FIGS. 1 and 2 fail to provide means for effectively containing and delivering hot and compressed air in a manner that is cost beneficial.

In view of the foregoing, it is an object of this invention to provide a low-cost TSU that provides efficient heat storage, heat delivery and pressure containment. This object is achieved with the features of the claims.

This and other objects of the present invention are accomplished in accordance with the principles of the present invention by providing a TSU having at least one flow channel disposed annularly about an axis that is substantially parallel to the TSU's longitudinal axis. The annular channel may be contained between an inner member and an outer member, both of which may include thermal mass or thermal storage material having desirable energy or heat storage properties and may be fabricated using standard mill products. The annular channel may be coupled to a port or pipe on each end of the channel for either providing fluid thereto or projecting fluid therefrom. In one embodiment of the present invention, the TSU may include a single annular flow channel disposed about the TSU's longitudinal axis. In another embodiment of the present invention, the TSU may include multiple parallel annular flow channels, each being contained between the outer member and a different inner member. In yet another embodiment of the present invention, the TSU may include multiple parallel annular flow channels that may be coupled to each other via transverse channels such that various fluid routing arrangements and piping connections are made possible within the TSU. The TSU's size and shape may be optimized for manufacturing, packaging, transporting and storing.

The inner and outer members of the TSU may be heated to effectively heat a fluid flowing through the annular channel. Efficient heat transfer is realized with the annular channel because the ring-like channel maximizes the surface area of fluid contact with the inner and outer members. The inner members may be centered, offset or tilted in order to achieve different heating profiles. Moreover, insulation may be added to the TSU to limit heat loss from the TSU.

In addition to providing energy storage and efficient heat transfer, the outer member provides structural support for the TSU, thereby enabling it to contain pressurized fluids. For example, the TSU may be used in a TACAS system whereby compressed air may be sensibly heated in the TSU. The heated and compressed air may then drive a turbine which powers an electrical generator to provide an electrical output. Features that enable single-ended or same-side piping and mounting to supporting structures may be added to the TSU to limit the effects of thermal growth and provide alternative methods to couple the TSU to the TACAS system. The TACAS system may also include an inert gas purging system that minimizes fouling in the TSU channel(s).

The invention provides further aspects as follows:
Aspect 1: A thermal storage unit having a longitudinal axis, said unit comprising:
   a port disposed at a first end of said unit; and
   a flow channel disposed annularly about said longitudinal axis, said annular channel being coupled to said port at a first point on said unit proximal to said first end, said annular channel having a diameter that tapers generally from a second point on said unit to said first point along said longitudinal axis.

   1.1 The thermal storage unit of aspect 1 further comprising a thermal storage material.
   1.2 The thermal storage unit of aspect 1.1, wherein said thermal storage material comprises a solid mass.
   1.3 The thermal storage unit of aspect 1.2, wherein said solid mass is iron, aluminum or steel.
   1.4 The thermal storage unit of aspect 1, wherein said port is a first port, said unit further comprising:
      a second port disposed at a second end of said unit, said annular channel being coupled to said second port at a third point on said unit proximal to said second end, said diameter of said annular channel tapering generally from a fourth point on said unit to said third point along said longitudinal axis.
   1.5 The thermal storage unit of aspect 1 further comprising at least one heat source for heating a fluid flowing through said annular channel.
   1.6 The thermal storage unit of aspect 1.5, wherein said at least one heat source comprises an external radiant heater, an internal radiant heater, a resistive heater, and/or induction heating circuitry.
   1.7 The thermal storage unit of aspect 1.5 or 1.6, wherein said at least one heat source is coupled to control circuitry, said control circuitry for controlling said at least one heat source to maintain said unit at a predetermined temperature.
Aspect 2: A backup energy system comprising:
   the thermal storage unit of any one of aspects 1 to 1.7 for heating a fluid;
   a turbine coupled to said thermal storage unit for receiving said heated fluid, said received heated fluid driving said turbine; and
   an electrical generator for providing power when said turbine is driven by said heated fluid.

   2.1 The backup energy system of aspect 2 further comprising a heating system for heating said thermal storage unit.
   2.2 The backup energy system of aspect 2.1 further comprising control circuitry coupled to said heating system and said thermal storage unit, said control circuitry for controlling said heating system to maintain said thermal storage unit at a predetermined temperature.
   2.3 The backup energy system of any one of aspects 2 to 2.2, wherein said fluid is compressed air, said backup energy system further comprising a compressed air system to provide said compressed air to said thermal storage unit.
   2.4 The backup energy system of aspect 2.3, wherein said compressed air system is a storage tank that contains said compressed air.
   2.5 The backup energy system of any one of aspects 2 to 2.4 further comprising a bypass valve coupled to said thermal storage unit, said bypass valve for controlling a portion of said fluid provided to said thermal storage unit.
Aspect 3: A thermal storage unit having a longitudinal axis, said unit comprising:
   a first annular flow channel disposed about a first axis parallel to said longitudinal axis, said first channel being formed between a first inner cylindrical surface of a first member and an outer cylindrical surface of a second member, said outer cylindrical surface of said second member having a diameter smaller than said first inner cylindrical surface; and
   a second annular flow channel disposed about a second axis parallel to said longitudinal axis, said second channel being formed between a second inner cylindrical surface of said first member and an outer cylindrical surface of a third member, said outer cylindrical surface of said third member having a diameter smaller than said second inner cylindrical surface.

   3.1 The thermal storage unit of aspect 3 further comprising:
      a tubular inlet coupled to one end of said first and second channel, said inlet for providing fluid to said channel; and
      a tubular outlet coupled to the other end of said first and second channel.
   3.2 The thermal storage unit of aspect 3 or 3.1, wherein each of said first, second and third members comprises thermal storage material.
   3.3 The thermal storage unit of aspect 3.2, wherein said thermal storage material comprises a solid mass.
   3.4 The thermal storage unit of aspect 3.3, wherein said solid mass is iron, aluminum, or steel.
   3.5 The thermal storage unit of any one of aspects 3 to 3.4 further comprising at least one heat source for heating fluid provided to said first and second channels.
   3.6 The thermal storage unit of aspect 3.5, wherein said at least one heat source comprises an external radiant heater, an internal radiant heater, and/or a resistive heater.
   3.7 The thermal storage unit of aspect 3.5 or 3.6, wherein said at least one heat source comprises induction heating circuitry for causing current to circulate through said first, second and third members, whereby the circulating currents heat said members.
   3.8 The thermal storage unit of aspect 3.5, 3.6 or 3.7, wherein said at least one heat source is coupled to control circuitry, said control circuitry for controlling said at least one heat source in order to maintain said unit at a predetermined temperature.
   3.9 The thermal storage unit of any one of aspects 3 to 3.8, wherein the diameters of said outer cylindrical surfaces of said second and third members are substantially equal in length.
   3.10 The thermal storage unit of any one of aspects 3 to 3.9, wherein said first and second inner cylindrical surfaces have diameters that are substantially equal in length.
Aspect 4: A backup energy system comprising:
   the thermal storage unit of any one of aspects 3 to 3.10 for heating a fluid;
   a turbine coupled to said thermal storage unit for receiving said heated fluid, said received heated fluid driving said turbine; and
   an electrical generator for providing power when said turbine is driven by said heated fluid.

   4.1 The backup energy system of aspect 4 further comprising a heating system for heating said thermal storage unit.
   4.2 The backup energy system of aspect 4.1 further comprising control circuitry coupled to said heating system and said thermal storage unit, said control circuitry for controlling said heating system in order to maintain said thermal storage unit at a predetermined temperature.
   4.3 The system of any one of aspects 4 to 4.2, wherein said fluid is compressed air, said backup energy system further comprising a compressed air system to provide said compressed air to said thermal storage unit.
   4.4 The backup energy system of aspect 4.3, wherein said compressed air system is a storage tank that contains said compressed air.
   4.5 The system of any one of aspects 4 to 4.4 further comprising a bypass valve coupled to said thermal storage unit, said bypass valve for controlling a portion of said fluid provided to said thermal storage unit.
Aspect 5: A thermal storage unit, having a longitudinal axis, that heats fluid flowing through said unit, comprising:
   a first member having an outer diameter;
   a second member having an inner diameter that is larger than said outer diameter;
   an annular flow channel disposed about said axis and formed between said first and second members, wherein said first member is positioned within said second member;
   an inlet coupled to one end of said channel that provides fluid to said channel;
   an outlet coupled to the other end of said channel; and
   at least one heat source that heats said first and second members.
Aspect 6: A thermal storage unit, having a longitudinal axis, that heats fluid flowing through said unit, comprising:
   a plurality of inner members each having an outer diameter;
   an outer member having a plurality of through-holes bored therethrough, each said through-hole having an axis substantially parallel to said longitudinal axis, and wherein each said through-hole has a through-hole diameter that is larger than said outer diameter;
   a plurality of annular flow channels disposed about each said through-hole axis, each said channel being formed between one of said plurality of inner members and one of said plurality of through-holes, wherein said each said inner member is positioned within said outer member;
   an inlet coupled to one end of said channels that provides fluid to said channels;
   an outlet coupled to the other end of said channels; and
   at least one heat source that heats said plurality of inner members and said outer member.
Aspect 7: A thermal storage unit having a longitudinal axis, the unit comprising:
   a first annular flow channel disposed about an axis parallel to the longitudinal axis;
   a second annular flow channel disposed adjacently to the first annular flow channel about an axis parallel to the longitudinal axis;
   a first transverse channel coupling the first and second annular flow channels at a first location along the longitudinal axis that is proximal to an end of the unit;
   a third annular flow channel disposed adjacently to the second annular flow channel about an axis parallel to the longitudinal axis; and
   a second transverse channel coupling the second and third annular flow channels at a second location along the longitudinal axis that is distal from the end of the unit.

   7.1 The thermal storage unit of aspect 7 wherein each of the first, second and third transverse channels is perpendicular to the first, second and third annular flow channels.
   7.2 The thermal storage unit of aspect 7 or 7.1 further comprising:
      a fourth annular flow channel disposed adjacently to the third annular flow channel about an axis parallel to the longitudinal axis; and
      a third transverse channel coupling the third and fourth annular flow channels at a third location along the longitudinal axis that is proximal to the end of the unit.
   7.3 The thermal storage unit of aspect 7.2 wherein the first and third transverse channels are parallel to one another and perpendicular to the second transverse channel.
   7.4 The thermal storage unit of any one of aspects 7 to 7.3 further comprising a fourth transverse channel coupling the first and fourth annular flow channels at a fourth location along the longitudinal axis that is distal from the end of the unit.
   7.5 The thermal storage unit of aspect 7.4 wherein each of the first, second, third and fourth transverse channels is perpendicular to the first, second, third and fourth annular flow channels.
   7.6 The thermal storage unit of aspect 7.4 or 7.5 wherein the first and third transverse channels are parallel to one another, the second and third transverse channels are parallel to one another and perpendicular to the first and third transverse channels.
   7.7 The thermal storage unit of aspect 7.2 wherein the first and second annular flow channels are in fluidic communication with each other through the first transverse channel, the second and third annular flow channels are in fluidic communication with each other through the second transverse channel and the second and third annular flow channels are in fluidic communication with each through the third transverse channel.
   7.8 The thermal storage unit of any one of aspects 7.4 to 7.7 wherein the first and second annular flow channels are in fluidic communication with each other through the first transverse channel, the second and third annular flow channels are in fluidic communication with each other through the second transverse channel, the second and third annular flow channels are in fluidic communication with each through the third transverse channel and the third an fourth annular flow channels in fluidic communication with each other through the fourth transverse channel.
Aspect 8: A method for using the thermal storage unit of aspect 7.7, the method comprising:
   providing a fluid to thermal storage unit such that:
      the fluid flows through the first annular flow channel to the first transverse channel,
      the fluid flows through the first transverse channel to the second annular flow channel,
      the fluid flows through the second annular flow channel to the second transverse channel,
      the fluid flows through the second transverse channel to the third annular flow channel,
      the fluid flows through the third annular flow channel to the third transverse channel, and
      the fluid flows through the third transverse channel to the fourth annular flow channel; and
      retrieving the fluid from the thermal storage unit after the fluid has flown through the fourth annular flow channel.
Aspect 9: A method for using the thermal storage unit of aspect 7.8, the method comprising:
   providing a fluid to thermal storage unit such that the fluid flows through a first and second path simultaneously, the first path comprising:
      the fluid flowing through the first annular flow channel to the first transverse channel,
      the fluid flowing through the first transverse channel to the second annular flow channel, and
      the fluid flowing through the second annular flow channel to the second transverse channel,
      the second path comprising:
      the fluid flowing through fourth transverse channel to the fourth annular flow channel,
      the fluid flowing through fourth annular flow channel to the third transverse channel, and
      the fluid flowing through the third transverse channel to the third annular flow channel; and
      retrieving the fluid from the thermal storage unit after the fluid has flown through the second transverse channel in the first path and after the fluid has flown through the third annular flow channel in the second path.
Aspect 10: A method for using the thermal storage unit of aspect 7.8, the method comprising:
   providing a fluid to thermal storage unit such that the fluid flows through a first and second path simultaneously, the first path comprising:
      the fluid flowing through the first annular flow channel to the first transverse channel, and
      the fluid flowing through the first transverse channel to the second annular flow channel, the second path comprising:
         the fluid flowing through fourth transverse channel to the fourth annular flow channel,
         the fluid flowing through fourth annular flow channel to the third transverse channel,
         the fluid flowing through the third transverse channel to the third annular flow channel, and
         the fluid flowing through the third annular flow channel to the second transverse channel; and
         retrieving the fluid from the thermal storage unit after the fluid has flown through the second annular flow channel in the first path and after the fluid has flown through the second transverse channel in the second path.
Aspect 11: The method of aspects 8, 9 or 10 further comprising heating the thermal storage unit using a heat source.
Aspect 12: A method for adding piping connections to the thermal storage unit of aspect 7.7 wherein the end of the thermal storage unit is a first end, the thermal storage unit having a second end proximal to the second location, the method comprising:
   about the second end, coupling a first pipe to the first annular flow channel for providing fluid to the thermal storage unit.

   12.1 The method of aspect 12 further comprising:
      about the second end, coupling a second pipe to one of the channels from the group consisting of the second annular flow channel, the third annular flow channel, the fourth annular flow channel and the second transverse channel for retrieving fluid from the thermal storage unit.

   12.2 The method of aspect 12.1 further comprising coupling at least one beam to the thermal storage unit about the second end for securing the thermal storage unit to a support structure.
   12.3 The method of aspect 12.2 wherein the at least one beam is coupled to the thermal storage unit through one of the fixtures from the group consisting of at least one threaded rod and at least one bushing.
   12.4 The method of aspect 12.2 or 12.3 wherein the support structure comprises a plurality of apertures for placing heating rods in order to heat the thermal storage unit.
   12.5 The method of aspect 12.2, 12.3 or 12.4 wherein the support structure comprises insulation material coupled to the thermal storage unit for preventing heat loss from the thermal storage unit.
   12.6 The method of aspect 12.5 wherein the insulation material comprises inert ceramic microporous material.
   12.7 The method of aspect 12.5 wherein the insulation material is in pressed rigid board form.
   12.8 The method of aspect 12.5 wherein the insulation material is in fabric-coated stitched form.
   12.9 The method of any one of aspects 12.5 to 12.8 wherein the support structure further comprises an envelope for protecting the insulation material coupled to the thermal storage unit.
   12.10 A method for adding piping connections to the thermal storage unit of aspect 7.8 wherein the end of the thermal storage unit is a first end, the thermal storage unit having a second end proximal to the second and fourth locations, the method comprising:
      about the second end, coupling a first pipe to one of the channels from the group consisting of the first annular flow channel and the second transverse channel for providing fluid to the thermal storage unit.
   12.11 The method of aspect 12.10 further comprising:
      about the second end, coupling a second pipe to one of the channels from the group consisting of the second annular flow channel, the third annular flow channel, the fourth annular flow channel, the second transverse channel and the fourth transverse channel for retrieving fluid from the thermal storage unit.
   12.12 The method of aspect 12.11 further comprising coupling at least one beam to the thermal storage unit about the second end for securing the thermal storage unit to a support structure.
   12.13 The method of aspect 12.12 wherein the at least one beam is coupled to the thermal storage unit through one of the fixtures from the group consisting of at least one threaded rod and at least one bushing.
   12.14 The method of aspect 12.12 or 12.13 wherein the support structure comprises a plurality of apertures for placing heating rods in order to heat the thermal storage unit.
   12.15 The method of aspect 12.12, 12.13, or 12.14 wherein the support structure comprises insulation material coupled to the thermal storage unit for preventing heat loss from the thermal storage unit.
   12.16 The method of aspect 12.15 wherein the insulation material comprises inert ceramic microporous material.
   12.17 The method of aspect 12.15 wherein the insulation material is in pressed rigid board form.
   12.18 The method of aspect 12.15 wherein the insulation material is in fabric-coated stitched form.
   12.19 The method of aspect 12.15 wherein the support structure further comprises an envelope for protecting the insulation material coupled to the thermal storage unit.
Aspect 13: A backup energy system comprising:
   the thermal storage unit of any one of aspects 7 to 7.8 for heating a fluid;
   a turbine coupled to the thermal storage unit for receiving the heated fluid, the received heated fluid driving the turbine; and
   an electrical generator for providing power when the turbine is driven by the heated fluid.

   13.1 The backup energy system of aspect 13 further comprising:
      a heating system for heating the thermal storage unit; and
      means for maintaining the thermal storage unit at a predetermined temperature.
   13.2 The backup energy system of aspect 13 or 13.1 wherein the fluid is compressed air, the system further comprising a storage tank containing compressed air for providing the compressed air to the thermal storage unit.
   13.3 The backup energy system of aspect 13.2 further comprising:
      a storage tank containing an inert gas for purging the compressed air in the thermal storage unit; and
      a valve coupled to the storage tank for providing the inert gas to the thermal storage unit.
   13.4 The backup energy system of aspect 13.3 wherein the inert gas is a inert gas that is heavier than air.
   13.5 The backup energy system of aspect 13.3 wherein the inert gas is argon.
Aspect 14: A thermal storage unit comprising:
   at least two annular flow channels disposed adjacently to one another, each annular flow channel being formed between an inner cylindrical surface of a single first member and an outer cylindrical surface of a second member, the outer cylindrical surface having a diameter smaller than the inner cylindrical surface; and
   a transverse member coupling the at least two annular flow channels to each other such that they are in fluidic communication with one another.

   14.1 The thermal storage unit of aspect 14, the thermal storage unit having a longitudinal axis, each annular flow channel being disposed parallel to the unit's longitudinal axis.
   14.2 The thermal storage unit of aspect 14.1 wherein the transverse member is perpendicular to the unit's longitudinal axis.
   14.3 The thermal storage unit of aspect 14.1 or 14.2 wherein each one of the second members has a longitudinal axis, at least one second member being disposed such that its longitudinal axis is parallel to the unit's longitudinal axis.
   14.4 The thermal storage unit of aspect 14.3 wherein the at least one of the second members is positioned such that it does not come in contact with the first member.
   14.5 The thermal storage unit of aspect 14.3 wherein the at least one of the second members is positioned such that it comes in contact with the first member.
   14.6 The thermal storage unit of any one of aspects 14.1 to 14.5 wherein each one of the second members has a longitudinal axis, at least one second member being disposed such that its longitudinal axis is not parallel to the unit's longitudinal axis.
   14.7 The thermal storage unit of aspect 14.6 wherein the at least one of the second members is positioned such that it comes in contact with the first member.
   14.8 The thermal storage unit of any one of aspects 14.1 to 14.7 wherein movement of at least one of the second members in a direction transverse to the unit's longitudinal axis is restricted through a fixture coupled to the least one of the second members.
   14.9 The thermal storage unit of any one of aspects 14.1 to 14.7 wherein movement of at least one of the second members in a direction parallel to the unit's longitudinal axis is restricted through a fixture coupled to the least one of the second members.
   14.10 The thermal storage unit of any one of aspects 14 to 14.9 wherein at least a portion is removed from at least one of the second members.
Aspect 15: A method for fabricating the thermal storage unit of any one of aspects 14 to 14.10, the method comprising:
   creating a plurality of holes in a block of solid material to form the first member and the transverse member; and
   inserting the second members into the first member to form the at least two annular flow channels.

   15.1 The method of aspect 15 wherein each of the block of solid material and the second members comprises thermal storage material.
   15.2 The method of aspect 15.1 wherein the thermal storage material is constructed from one of the materials from the group consisting of iron, aluminum and steel.
   15.3 The method of any one of aspects 15 to 15.2 further comprising sealing the plurality of holes with a plurality of plugs wherein a first plug is drilled to form an inlet for providing a fluid to the thermal storage unit and wherein a second plug is drilled to form an outlet for retrieving the fluid from the thermal storage unit.
Aspect 16: A method for adding piping connections to the thermal storage unit of any one of aspects 14 to 14.10, the method comprising:
   coupling a first pipe to a first one of the at least two annular flow channels for providing fluid to the first one of the at least two annular flow channels; and
   coupling a second pipe to a second one of the at least two annular flow channels for retrieving fluid from the second one of the at least two annular flow channels.

   16.1 A backup energy system comprising:
      the thermal storage unit of any one of aspects 14 to 14.10 for heating a fluid;
      a turbine coupled to the thermal storage unit for receiving the heated fluid, the received heated fluid driving the turbine; and
      an electrical generator for providing power when the turbine is driven by the heated fluid.
   16.2 The backup energy system of aspect 16.1 further comprising:
      a heating system for heating the thermal storage unit; and
      means for maintaining the thermal storage unit at a predetermined temperature.
   16.3 The backup energy system of aspect 16.1 or 16.2 wherein the fluid is compressed air, the system further comprising a storage tank containing compressed air for providing the compressed air to the thermal storage unit.
   16.4 The backup energy system of aspect 16.3 further comprising:
      a storage tank containing an inert gas for purging the compressed air in the thermal storage unit; and
      a valve coupled to the storage tank for providing the inert gas to the thermal storage unit.
   16.5 The backup energy system of aspect 16.4 wherein the inert gas is a inert gas that is heavier than air.
   16.6 The backup energy system of aspect 16.4 wherein the inert gas is argon.

The above and other features of the present invention, its nature and various advantages will be more apparent upon consideration of the following detailed description, taken in conjunction with the accompanying drawings, in which like reference characters refer to like parts throughout, and in which:

FIG. 1 is a top perspective view of a known thermal storage unit;

FIG. 2 is a top perspective view of another known thermal storage unit;

FIG. 3 is a partial sectional view of a thermal storage unit in accordance with the principles of the present invention;

FIG. 4 is a cross-sectional view of the thermal storage unit of FIG. 3, taken generally from line 4-4 of FIG. 3;

FIG. 5 is a cross-sectional view of the thermal storage unit of FIG. 3, taken generally from line 5-5 of FIG. 3;

FIG. 6 is a partial perspective view of another thermal storage unit in accordance with the principles of the present invention;

FIG. 7 is a cross-sectional view of the thermal storage unit of FIG. 6, taken generally from line 7-7 of FIG. 6;

FIG. 8 is a partial schematic diagram of a thermal and compressed air storage system employing a thermal storage unit in accordance with the principles of the present invention;

FIG. 9 is a top perspective view of yet another thermal storage unit in accordance with the principles of the present invention;

FIG. 10 is another top perspective view of the thermal storage unit of FIG. 9 in accordance with the principles of the present invention;

FIG. 11 is a diagram indicating a flow arrangement in accordance with the principles of the present invention;

FIG. 12 is a diagram indicating another flow arrangement in accordance with the principles of the present invention;

FIG. 13 is a diagram indicating yet another flow arrangement in accordance with the principles of the present invention;

FIG. 14 is a partial sectional view of a portion of the thermal storage unit of FIG. 9, taken generally from line 14-14 of FIG. 9;

FIG. 15 is a cross-sectional view of the portion of the thermal storage unit of FIG. 14, taken generally from line 15-15 of FIG. 14;

FIG. 16 is a partial sectional view of a portion of an alternative embodiment of the thermal storage unit of FIG. 9, taken generally from line 14-14 of FIG. 9;

FIG. 17 is a cross-sectional view of the portion of the thermal storage unit of FIG. 16, taken generally from line 17-17 of FIG. 16;

FIG. 18 is a partial sectional view of a portion of another alternative embodiment of the thermal storage unit of FIG. 9, taken generally from line 14-14 of FIG. 9;

FIG. 19 is a cross-sectional view of the portion of the thermal storage unit of FIG. 18, taken generally from line 19-19 of FIG. 18;

FIG. 20 is a cross-sectional view of the portion of the thermal storage unit of FIG. 18, taken generally from line 20-20 of FIG. 18;

FIG. 21 is a cross-sectional view of the portion of the thermal storage unit of FIG. 18, taken generally from line 21-21 of FIG. 18;

FIG. 22 is a cross-sectional view of the thermal storage unit of FIG. 9, taken generally from line 234-234 of FIG. 9;

FIG. 23 is a cross-sectional view of an alternative embodiment of the thermal storage unit of FIG. 9, taken generally from line 234-234 of FIG. 9;

FIG. 24 is a cross-sectional view of another alternative embodiment of the thermal storage unit of FIG. 9, taken generally from line 234-234 of FIG. 9;

FIG. 25 is another cross-sectional view of the portion of the thermal storage unit of FIG. 14, taken generally from line 15-15 of FIG. 14;

FIG. 26 is a partial sectional view of a portion of the thermal storage unit of FIG. 9, taken generally from line 26-26 of FIG. 9;

FIG. 27 is a partial perspective view of a portion of another embodiment of the thermal storage unit of FIG. 9;

FIG. 28 is a partial sectional view of a portion of the thermal storage unit of FIG. 9, taken generally from line 28-28 of FIG. 9;

FIG. 29 is a perspective view of the thermal storage unit of FIG. 3 or FIG. 6 in accordance with the principles of the present invention;

FIG. 30 is a perspective view of the thermal storage unit of FIG. 9 in accordance with the principles of the present invention;

FIG. 31 is another perspective view of the thermal storage unit of FIG. 9 in accordance with the principles of the present invention;

FIG. 32 is yet another perspective view of the thermal storage unit of FIG. 9 in accordance with the principles of the present invention;

FIG. 33 is yet another perspective view of the thermal storage unit of FIG. 9 in accordance with the principles of the present invention;

FIG. 34 is yet another perspective view of the thermal storage unit of FIG. 9 in accordance with the principles of the present invention;

FIG. 35 is yet another perspective view of the thermal storage unit of FIG. 9 in accordance with the principles of the present invention;

FIG. 36 is yet another perspective view of the thermal storage unit of FIG. 9 in accordance with the principles of the present invention;

FIG. 37 is yet another perspective view of the thermal storage unit of FIG. 9 in accordance with the principles of the present invention; and

FIG. 38 is another partial schematic diagram of a thermal and compressed air storage system employing a thermal storage unit in accordance with the principles of the present invention.

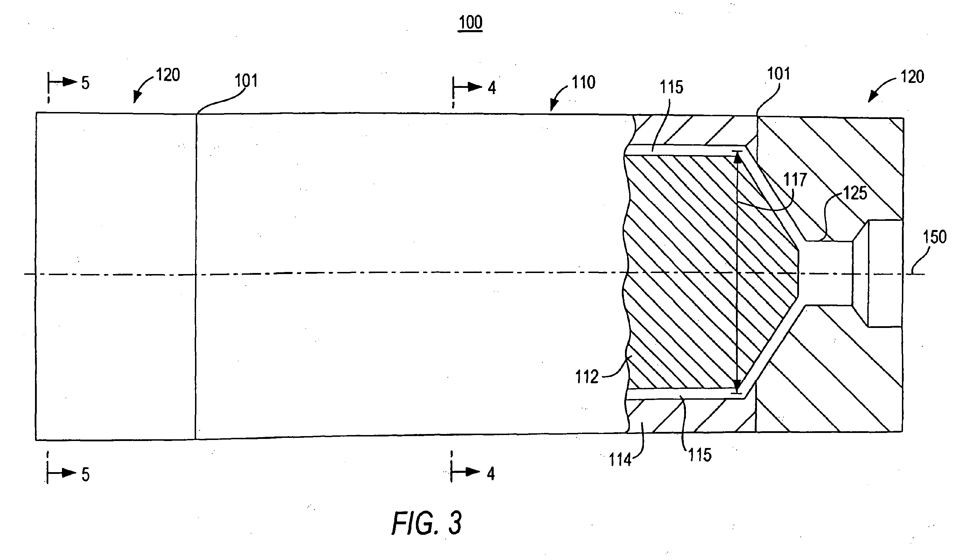

FIG. 3 depicts an embodiment of thermal storage unit (TSU) 100, in accordance with the principles of the present invention. TSU 100 may be cylindrical in shape and may have longitudinal axis 150. Persons skilled in the art will appreciate that the general shape of TSU 100 is not limited to cylinders and may be constructed to fulfill any design criteria.

TSU 100 may include three main compartments, namely, middle portion 110 and end portions 120. Middle portion 110 may be defined as the portion of TSU 100 that is between lines 101, whereas end portions 120 may be defined as the portions of TSU 100 that extend beyond lines 101 to both ends of TSU 100. When fluid is applied to TSU 100, it is directed into one of end portions 120, flows through middle portion 110, and is directed out of the other end portion 120. Fluid may be matter in the liquid, gas or plasma phase.

When fluid is routed through middle portion 110, it flows in a ring-like channel, which is referred to as annular flow channel 115. Annular channel 115 may extend generally along middle portion 110, between outer member 114 and inner member 112. Annular channel 115 may extend along the length of middle portion 110, in a direction that is substantially parallel to longitudinal axis 150.

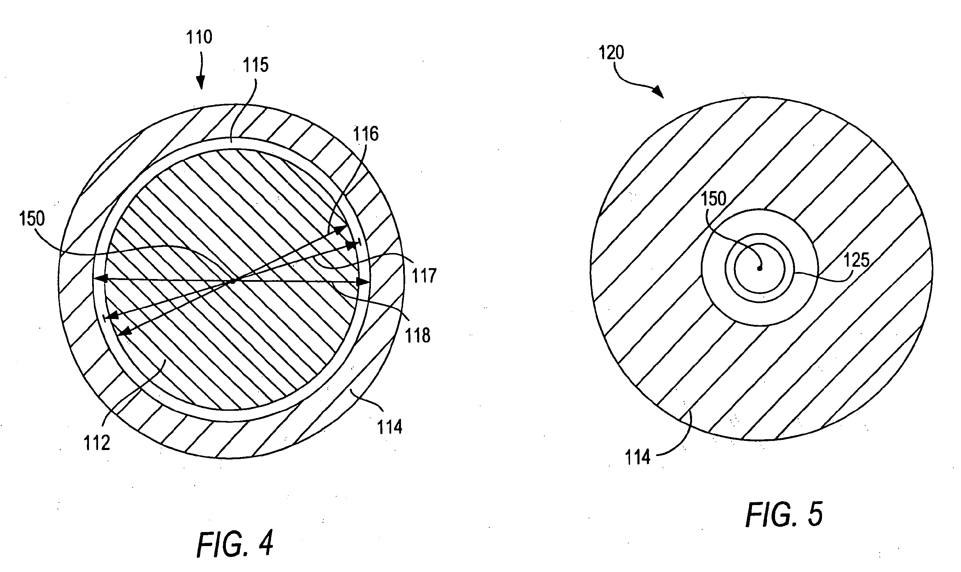

FIG. 4 shows a cross-sectional view taken along line 4-4 of FIG. 3. Annular channel 115 may have an inner diameter and an outer diameter. Inner diameter 116 and outer diameter 118 of FIG. 4 define the cross-sectional area of annular channel 115. The portion of inner member 112 contained in middle portion 110 may have a cylindrical outer surface, thereby providing a basis for inner diameter 116 of annular channel 115 (i.e. the diameter of inner member 112). Similarly, the inner surface of outer member 114, which may be cylindrically shaped and which is contained in middle portion 110, provides a basis for outer diameter 118 of annular channel 115 (i.e. the diameter of outer member 114). The length of a mean diameter (depicted by dotted line 117) of annular channel 115 may be calculated as the mean value of the length of inner and outer diameters 116 and 118.

Referring back to FIG. 3, because inner member 112 extends partially into end portions 120, and because outer member 114 extends through the entire length of TSU 100, annular channel 115 may also partially extend into end portions 120. Starting approximately at each end of middle portion 110, mean diameter 117 of annular channel 115 may taper into end portion 120, in a direction parallel to longitudinal axis 150.

End portions 120, which may be identical, may each include a hollow or tubular enclosure, namely, port 125, within a portion of outer member 114 that extends into each of the end portions. Port 125 may be coupled to the portion of annular channel 115 that extends into the end portion for either providing fluid thereto or projecting fluid therefrom. In this arrangement, annular channel 115 may decrease in mean diameter from a point within TSU 100 (e.g., a point proximal to line 101) to the point on the end portion where port 125 couples to annular channel 115. This arrangement enables fluid delivery to and from the TSU. Port 125 may be also seen in FIG. 5, which shows a cross-sectional view taken along line 5-5 of FIG. 3. Port 125 may be a tubular aperture (e.g., an inlet or outlet) for facilitating the delivery or projection of fluid to or from TSU 100.

In a preferred embodiment of the present invention, inner member 112 may be constructed from solid material(s) that have adequate thermal conductivity and other desirable thermal properties such as high volumetric heat capacity. Outer member 114 may be constructed from the same material(s) as inner member 112. Therefore, both inner and outer members 112 and 114 may provide thermal mass for energy storage. Alternatively, outer member 114 may be constructed from material(s) capable of withstanding high pressure, in addition to possessing desirable thermal properties. Such materials may include iron, steel, aluminum, any alloys thereof or any other suitable material(s).

According to the principles of the present invention, TSU 100 may be heated to a desired temperature by heating inner and outer members 112 and 114. Fluid may then be heated by routing it through TSU 100 such that it enters one of ports 125 at one end, flows through annular channel 115, and exits through port 125 at the opposite end.

Inner member 112 and/or outer member 114, may be heated through radiation by means of an external or internal heater. For example, a ceramic fiber heater that annularly surrounds -- without coming into contact with -- TSU 100 may heat both inner and outer members 112 and 114 through radiation when actuated. Alternatively, one or more heating rods may be placed into one or more cavities extending through at least a portion of or the entire length of TSU 100. When such heating rods are actuated, they radiate heat energy to heat both inner and outer members 112 and 114.

Due to the thermal conductivity of the inner and outer members 112 and 114, heat energy is effectively conducted through these members. Moreover, because annular channel 115 maximizes the surface area of fluid contact with the thermal mass in inner and outer members 112 and 114, the fluid flowing in the channel may be sensibly heated through convection from inner member 112 and/or outer member 114 to the fluid. Accordingly, heating either member or both enables the efficient heating of the fluid flowing through the channel. Thus, when fluid having a predetermined temperature (e.g., ambient temperature) is supplied to TSU 100, its temperature rises as it flows through annular channel 115 formed between inner and outer members 112 and 114.

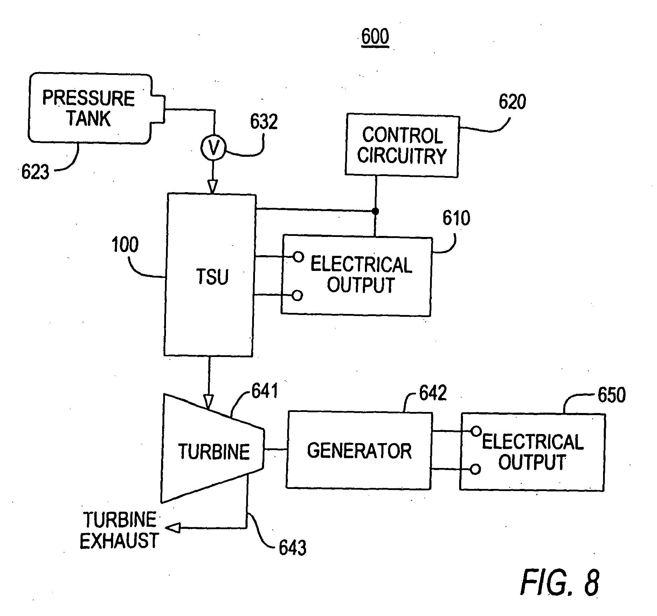

Persons skilled in the art will appreciate that electronic circuitry (not shown) may be used to monitor the temperature of TSU 100 and control the mechanism (e.g., the external ceramic heater or internal heating rods) used to heat TSU 100. A more detailed discussion of such electronics is provided below in connection with FIG. 8.

An example of a fluid that may be routed through TSU 100 is compressed air. Compressed air may be heated using TSU 100, as discussed above. Moreover, TSU 100 provides structural integrity against pressure exerted from the compressed air flowing in the channel. This is due to the fact that outer member 114, which contains material capable of withstanding high pressure, cylindrically surrounds the annular channel, thereby containing the pressure exerted by the air on the outer member. Therefore, not only is TSU 100 adequate for providing heat storage, TSU 100 is conducive to high pressure operation, unlike the parallel-plate channel flow TSU 10 of FIG. 1.

Moreover, unlike drilling multiple small-diameter holes that extend through the entire length of a bar in order to implement tube flow as shown in connection with TSU 20 of FIG. 2, fabricating TSU 100 may be significantly easier and less costly. This is because TSU 100 may be fabricated using conventional mill products having cylindrical shapes such as pipes, tubes and round bars. For example, inner member 112 may be a round bar that is machined to achieve the desired diameter and profile.

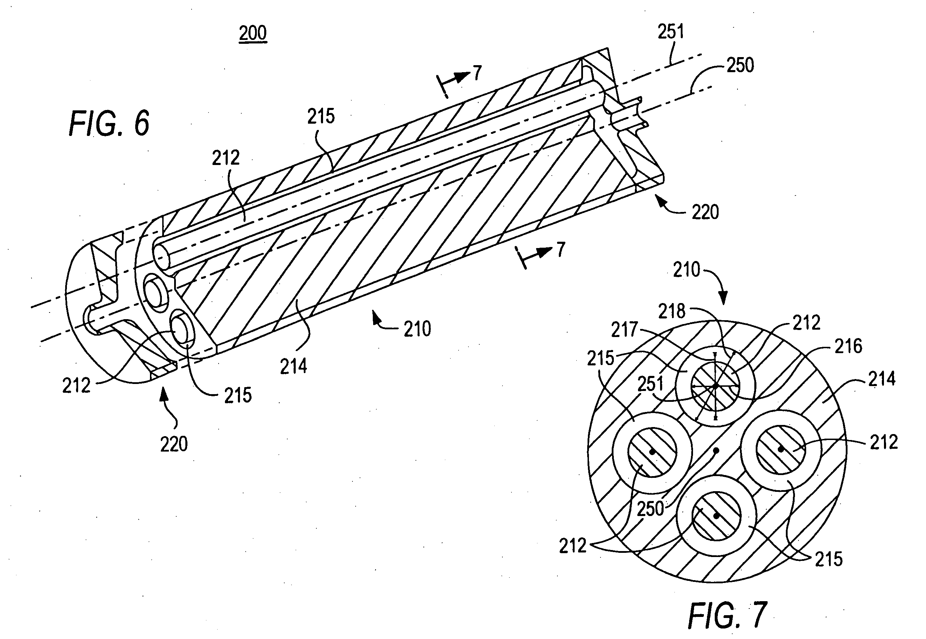

FIG. 6 depicts an alternative embodiment of thermal storage unit (TSU) 200 that utilizes multiple annular flow channels, in accordance with the principles of the present invention. TSU 200 may be cylindrical in shape and may have longitudinal axis 250. Persons skilled in the art will appreciate that the general shape of TSU 200 is not limited to cylinders and may be constructed to fulfill any design criteria.

Like TSU 100 of FIG. 3, TSU 200 may include three main compartments, namely, middle portion 210 and end portions 220. End portions 220, which may be identical, may each include a hollow or tubular enclosure, namely, port 225, for either providing fluid to middle portion 210 or projecting fluid therefrom. When fluid is routed through middle portion 210, it flows through multiple annular flow channels 215. Annular flow channels 215 may be parallel to one another and may extend generally along middle portion 210.

Each one of annular channels 215 may be disposed annularly about an axis that is substantially parallel to longitudinal axis 250, such as axis 251. Each annular channel 215 may be formed by drilling or casting a relatively large-diameter hole in a round bar, which may be referred to as outer member 214, and inserting a smaller round bar, which may be referred to as inner member 212, such that each inner member 212 extends at least along the length of middle portion 210. Because the holes in outer member 214 are relatively large, at least compared to the holes bored through TSU 20 of FIG. 2, TSU 200 can be fabricated relatively easily using conventional mill products.
Not only does TSU 200 benefit from ease of manufacturing, it also provides efficient energy storage, heat transfer and pressure containment consistent with that discussed above in connection with TSU 100 of FIG. 1.

FIG. 7 shows a cross-sectional view taken along line 7-7 of FIG. 6. Each one of annular channels 215 may be formed between the inner cylindrical surface of a hole in outer member 214 and the outer cylindrical surface of one of inner members 212. Each inner cylindrical surface in outer member 214 provides a basis for outer diameter 218 in one of the annular channels, while each outer cylindrical surface of inner members 212 provides a basis for inner diameter 216 in the same annular flow channel. The length of a mean diameter (depicted by dotted line 217) of each annular channel 215 may be calculated as the mean value of the length of inner and outer diameters 216 and 218 for the annular channel.

In a preferred embodiment of the present invention, each mean diameter of annular channels 215 may be substantially equal in length. Moreover, inner and outer members 212 and 214 may be constructed from the same material as members 112 and 114 of TSU 100 of FIG. 3, and may be heated using the same means described for heating TSU 100. Fluid may therefore be heated by routing it through heated TSU 200 such that it enters one of ports 225 at one end, flows through annular channel 215, and exits through port 225 at the opposite end.

The present invention may be used in many applications. FIG. 8 illustrates one such application. More specifically, FIG. 8 shows a thermal and compressed air storage (TACAS) system 600 for providing output power utilizing TSU 100 of FIG. 3, described above. For example, FIG. 8 may represent a backup energy system that provides backup power to a load in the event of a disturbance in the supply of power from another power source (e.g., utility power failure.) Naturally, TSU 200 of FIG. 6 may be used instead of TSU 100 in TACAS system 600.

The following discussion of TACAS system 600 is not intended to be a thorough explanation of the components of a TACAS, but rather an illustration of how TSU 100 or 200 can enhance the performance of a TACAS system. For a detailed description of a TACAS system, see commonly-assigned, co-pending U.S. patent application No. 10/361,728, filed February 5, 2003, which is hereby incorporated by reference herein in its entirety.

As shown in FIG. 8, TACAS system 600 includes storage or pressure tank 623, valve 632, TSU 100, electrical input 610, turbine 641, generator 642 and electrical output 650. When electric power is needed from system 600, compressed air from pressure tank 623 may be routed through valve 632 to TSU 100. TSU 100 may heat the compressed air before it is provided to turbine 641.

The hot air emerging from TSU 100 may flow against the turbine rotor (not shown) of turbine 641 and drive turbine 641, which may be any suitable type of turbine system (e.g., a radial-flow turbine). In turn, turbine 641 may drive electrical generator 642, which produces electric power and provides it to electrical output 650.

Also shown in FIG. 8 is turbine exhaust 643 (e.g., the exhaust gases emerging from turbine 641). Turbine exhaust 643 may be vented through an exhaust pipe (not shown), or simply released to recombine with atmospheric air.

Not only is system 600 advantageous because it uses a relatively inexpensive and efficient TSU, it is also non-polluting. That is because, unlike conventional systems that use fuel-combustion systems to provide hot air to the turbine, it does not require a fuel supply to heat the air that is being supplied to turbine 641. Instead, TSU 100 may be powered by electrical input 610, which provides the energy needed to heat the compressed air, while providing effective pressure containment. For example, TSU 100 may include an external or internal radiant heater, as discussed above, which may be powered by electrical input 610. System 600 therefore provides the benefits of heating compressed air from pressure tank 623 before it is supplied to turbine 641, without producing the harmful emissions associated with combustion systems.

It will also be understood by persons skilled in the art that, alternatively, the thermal storage material of TSU 100 may be heated by any other suitable type of heating system. For example, a resistive heater may provide a heat source that is in physical contact with the thermal storage material of TSU 100 and may heat this material to a predetermined temperature. Alternatively, electrically conductive thermal storage materials, such as iron, may be heated inductively using induction heating circuitry that causes current to circulate through and heat the thermal storage material of TSU 100. Thus, the invention is not limited to the specific heating manners discussed above.

TACAS system 600 may also include control circuitry 620 which may be coupled to both TSU 100 and electrical input 610. Control circuitry 620 may include means for measuring the temperature of TSU 100. Control circuitry 620 may also include electric circuitry for controlling the temperature of TSU 100. Control circuitry 620 may control the temperature of TSU 100 by, for example, controlling the electric power provided to the heat source. This may be achieved by providing instructions to electrical input 610, such as instructions to activate, deactivate, increase or decrease the output of electrical input 610. Control circuitry 620, along with electrical input 610, may therefore be used to monitor and control the temperature of TSU 100. As a result, the TSU 100 may be heated to and maintained at a desired temperature.

Moreover, valve 632 may be coupled to piping (not shown) that bypasses TSU 100 and feeds into turbine 641 along with the output from TSU 100. By controlling the portion of the total compressed air flow through the TSU, the ratio of heated to non-heated air provided to turbine 641 may be modified, thereby providing another means for controlling the temperature of the air being supplied to the turbine.

Another advantage of utilizing TSU 100 is that larger pressure tanks are not required as is the case with compressed air storage systems that do not utilize thermal storage units or combustion systems.

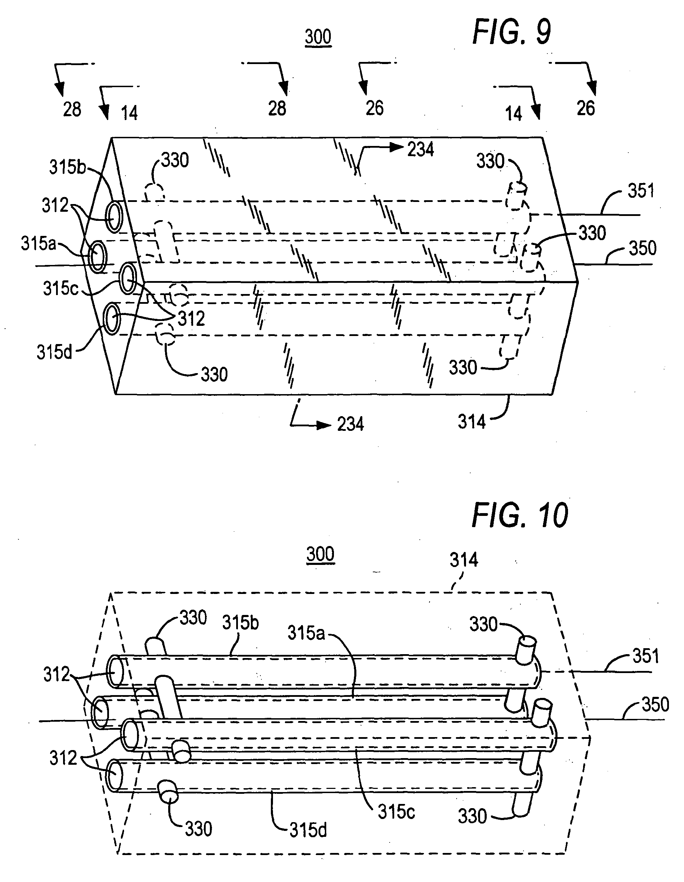

FIGS. 9 and 10 depict an alternative embodiment of thermal storage unit (TSU) 300 that also utilizes multiple annular flow channels, in accordance with the principles of the present invention. TSU 300 may be rectangular in shape and may have longitudinal axis 350. The rectangular shaped body of TSU 300 allows for optimized packaging, transporting and storing. Persons skilled in the art will appreciate that the general shape of TSU 300 is not limited to the particular shape depicted in FIGS. 9 and 10 and may be constructed to fulfill any design criteria.

Like TSU 200 of FIG. 6, TSU 300 may include multiple annular flow channels 315 through which fluid may flow. Annular channels 315 may be parallel to one another. Each one of annular channels 315 may be disposed annularly about an axis that is substantially parallel to longitudinal axis 350, such as axis 351. Each one of annular channels 315 may extend generally along the length of TSU 300, between outer member 314 and one inner member 312.

TSU 300 may also include one or more transverse flow channels formed by transverse members 330, through which fluid may flow. Two adjacent annular channels 315 may be coupled through transverse member 330 close to one end of TSU 300. One of these two annular channels may be coupled to a different annular channel 315 that is adjacent to it through another transverse member 330 away from the first end and/or close to the other end of TSU 300. Transverse members need not extend through the entire width of TSU 300, so long as each transverse member couples two adjacent annular channels to each other such that they are in fluidic communication with one another.

Two transverse members 330 may be disposed close to a first end of TSU 300 wherein one transverse member 300 may couple a set of annular channels 315 that is different than the set of annular channels 315 coupled by the other member. At least one transverse member 330 may be disposed close to the other end of TSU 300 for coupling a set of annular channels 315 that is different than the sets coupled by the members disposed close to the first end. The sets of annular channels coupled by two members disposed close to the same end of TSU 300 preferably do not have an annular channel in common. Moreover, the sets of annular channels coupled by two members disposed close to opposite ends of TSU 300 preferably do have one annular channel in common. Furthermore, the two members disposed close to the same end preferably are parallel to each other and perpendicular to the at least one member disposed close to the other end.

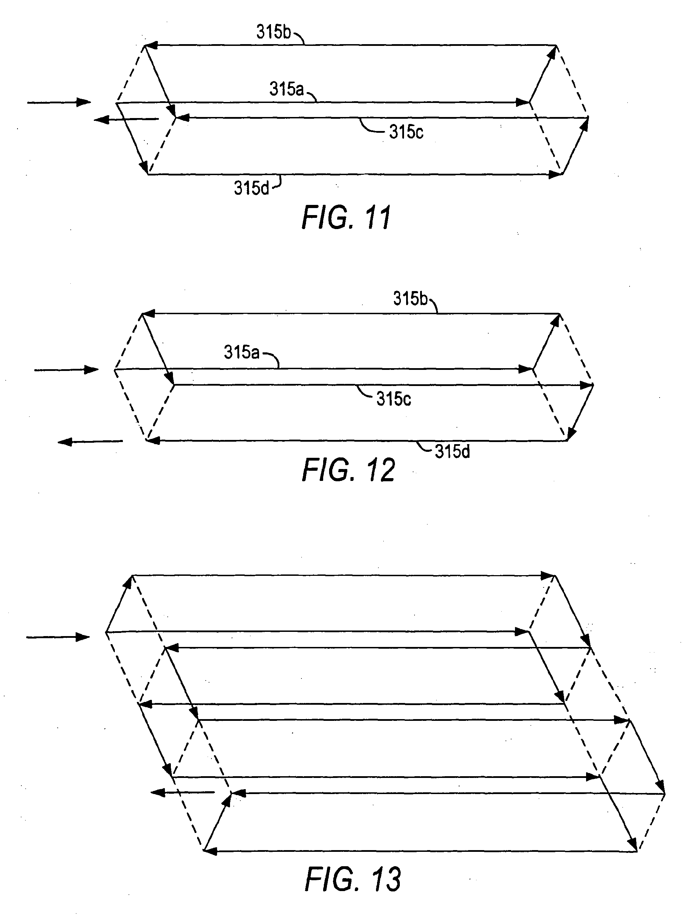

The foregoing arrangement of annular channels 315 and transverse members 330 allows for much flexibility in routing of fluid through TSU 300. For example, fluid may be routed through one or more annular channels simultaneously via different paths. Such an arrangement also enables fluid to be supplied to and retrieved from the same end of TSU 300, provided the fluid flows through an even number of annular channels. Examples of different fluid flow arrangements are depicted in FIGS. 11-13.

FIG. 11 illustrates a two-pass/two-path flow arrangement that may be implemented through TSU 300 of FIGS. 9 and 10. In this arrangement fluid may be supplied to channel 315a and may then flow along two different paths: 1) through channel 315a then channel 315b, and 2) through channel 315d then channel 315c, before exiting through channel 315c. Such a flow arrangement requires four transverse members 330 for coupling each channel to one that is adjacent to it.

FIG. 12 illustrates a four-pass/one-path flow arrangement that may be implemented through TSU 300 as well. In this arrangement fluid may be supplied to channel 315a and may then flow along a single path through channel 315a, then channel 315b, then channel 315c, then channel 315d, before exiting through channel 315d. Unlike the flow arrangement discussed in connection with FIG. 11, such a flow arrangement requires only three transverse members 330. Therefore, one of the transverse members 330 - namely, the member coupling channels 315a and 315d together - preferably is omitted when fabricating TSU 300 according to an alternative embodiment of the present invention.

Similarly, several transverse members may be omitted when fabricating TSU 300 according to another alternative embodiment of the present invention. Specifically, multiple TSUs 300 may be coupled together in order to provide even longer flow paths. For example, FIG. 13 illustrates a four-pass/two-path flow arrangement where fluid may flow along two different paths, each of which involving at least four different annular channels through which fluid may flow. Alternatively, the flow arrangement of FIG. 13 may be implemented through a single TSU having multiple sets of annular channels that are disposed next to each other and coupled through an appropriate number of transverse members. In this situation, a single transverse member may or may not couple multiple annular channels to one another.

The foregoing flow arrangements are only illustrative of the principles of the present invention. Various modifications and fluid routing arrangements can be implemented by those skilled in the art without departing from the scope and spirit of the invention.

In a preferred embodiment of the present invention, inner and outer members 312 and 314 may be constructed from the same material as members 112, 212, 114 and 214 of TSUs 100 and 200 of FIGS. 3 and 6, and may be heated using the same means described for heating TSU 100. Fluid may therefore be heated by routing it through heated TSU 300.

Because TSU 300 utilizes annular flow channels, it provides efficient energy storage, heat transfer and pressure containment consistent with that discussed above in connection with TSU 100. Unlike TSUs 100 and 200 of FIGS. 3 and 6, which allow for only single-pass flow arrangements, TSU 300 allows for various fluid routing arrangements. Having fluid undergo multiple passes and/or multiple paths increases the length of fluid flow and flow area in the TSU, thereby allowing for retrieving more thermal energy in and from the TSU. However, this may also lead to an increase in pressure drop across the TSU.
Nevertheless, TSU 300 allows for much flexibility in choosing a flow arrangement that balances flow length and flow area with pressure drop in order to optimize thermal energy transfer and pressure conditions.

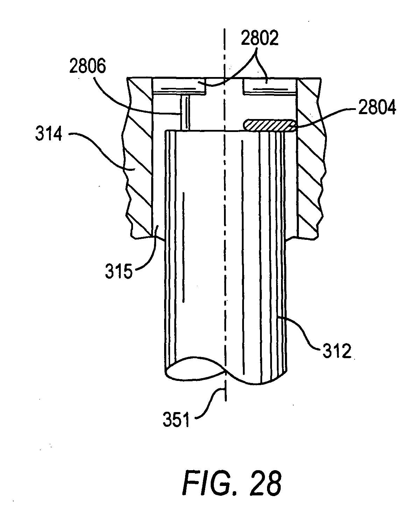

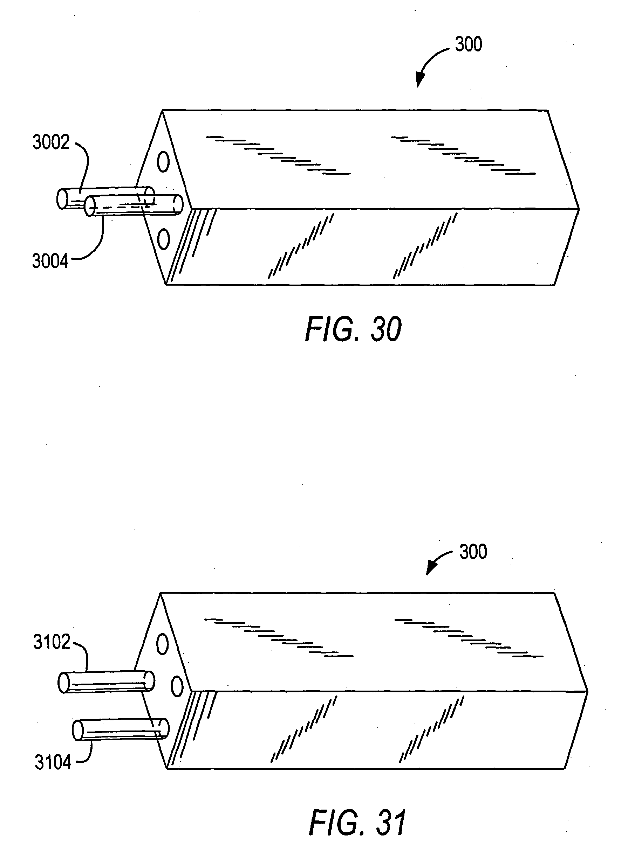

Moreover, similar to TSUs 100 and 200, TSU 300 can be fabricated relatively easily without incurring severe costs, as compared to drilling multiple small-diameter holes that extend through the entire length of a bar in order to implement tube flow as shown in connection with TSU 20 of FIG. 2. This is because TSU 300 may be fabricated using conventional mill products having rectangular or cylindrical shapes such as pipes, tubes and round bars. TSU 300 may be fabricated by machining, drilling, extruding or casting a block of solid material or an integrated manifold to form outer member 314 having longitudinal holes that are parallel to axis 350. The longitudinal holes preferably have inner cylindrical surfaces and need not extend through the entire length of the manifold. Transverse members 330 may be formed by machining, drilling or casting parallel transverse holes connecting two adjacent longitudinal holes. The transverse holes need not extend through the entire width of the manifold so long as each transverse member 330 couples two adjacent longitudinal holes. Inner members 312, which may be round bars, rods or any elongated solid structures having outer cylindrical surfaces, may then be inserted in the longitudinal holes, thereby forming annular channels 315. For a particular annular channel, the diameter of the outer cylindrical surface is smaller than that of the inner cylindrical surface. Inner member 312 need not extend through the entire length of the manifold. Transverse members 330 also form flow channels through which fluid may flow from one annular channel 315 to another. Appropriate welded or threaded plugs may be used to seal drilled entry points and ends, or other entry points and ends. One or more holes may be drilled in these plugs, thereby forming an inlet and/or an outlet for a particular annular channel, as shown in FIG. 28, or for a transverse flow channel. Piping connections, such as the ones shown in FIGS. 30-34 may be coupled to TSU 300 at such inlets and outlets for either providing fluid thereto or projecting fluid therefrom.

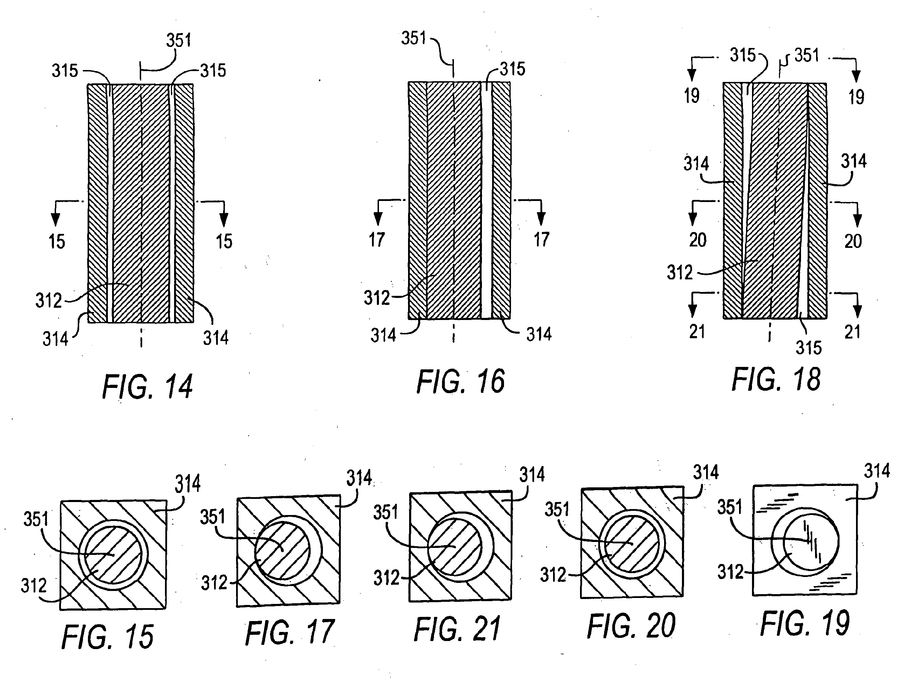

FIG. 14 is a partial sectional view of a portion of TSU 300, taken generally from line 14-14 of FIG. 9. FIG. 15 is a cross-sectional view of the portion of FIG. 14, taken generally from line 15-15 of FIG. 14. As can be seen, inner member 312 is positioned such that its longitudinal axis 351 does not intersect outer member 314 and such that inner and outer members 312 and 314 are not in contact with one another. In this embodiment, longitudinal axis 351 may be substantially concentric to the axis of the longitudinal hole in which inner member 312 in inserted. It may be said that inner member 312 is centered according to this embodiment of the present invention.

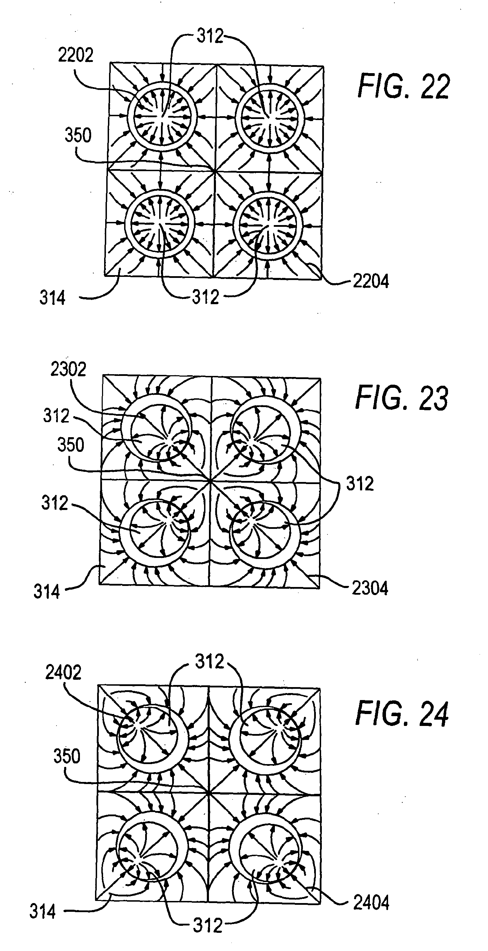

Centering inner members 312, as shown in FIG. 22, which is a cross-sectional view of TSU 300, taken generally from line 234-234 of FIG. 9, produces a uniform fluid velocity profile around axis 351. Heat transfer at the surface of centered inner members 312 and outer member 314 may result in heat flow along lines 2202 and 2204, respectively in these members. This, in turn, results in circumferentially uniform heat transfer from TSU 300 to the fluid flowing through it, thereby maximizing total thermal energy extraction from the thermal mass in inner and/or outer members 312 and 314. As a result, less material is required in the TSU. Therefore, providing uniform heat transfer in multiple-pass/multiple-channel units allows for reducing the size of the TSU.

In alternative embodiments of the present invention, inner member 312 may be positioned as shown in FIGS. 16 and 18.

FIG. 16 is a partial sectional view of a portion of an alternative embodiment of TSU 300, taken generally from line 14-14 of FIG. 9. FIG. 17 is a cross-sectional view of the portion of FIG. 16, taken generally from line 17-17 of FIG. 16. As can be seen, inner member 312 is displaced from the center and positioned such that its longitudinal axis 351 does not intersect outer member 314 and such that inner member 312 comes in contact with outer member 314. In this embodiment, longitudinal axis 351 may be parallel to the axis of the longitudinal hole in which inner member 312 in inserted.. It may be said that inner member 312 is offset according to this embodiment of the present invention.

FIG. 18 is a partial sectional view of a portion of another alternative embodiment of TSU 300, taken generally from line 14-14 of FIG. 9. FIG. 19 is a cross-sectional view of the portion of FIG. 18, taken generally from line 19-19 of FIG. 18, while FIG. 20 is a cross-sectional view of the portion of FIG. 18, taken generally from line 20-20 of FIG. 18, and FIG. 21 is a cross-sectional view of the portion of FIG. 18, taken generally from line 21-21 of FIG. 18. As can be seen, inner member 312 is displaced from the center and positioned such that its longitudinal axis 351 intersects outer member 314. More specifically, inner member 312 may be positioned such that it is centered close to the middle portion of annular channel 315, while inner member 312 may come in contact with outer member 314 at or close to the ends of annular channel 315. In this embodiment, longitudinal axis 351 may also intersect the axis of the longitudinal hole in which inner member 312 in inserted. It may be said that inner member 312 is tilted according to this embodiment of the present invention.

Positioning inner members 312, as shown in FIGS. 23 and 24, produces non-uniform fluid velocity profiles around axis 351. Heat transfer at the surface of displaced inner members 312 and outer member 314 may result in heat flow along lines 2302 and 2402 in the inner members shown in FIGS. 23 and 24, respectively. Similarly, heat transfer at the surface of outer member 314 may result in heat flow along lines 2304 and 2404 in the outer members shown in FIGS. 23 and 24, respectively. This, in turn, results in non-uniform heat transfer from TSU 300 to the fluid flowing through it. FIG. 23 is a cross-sectional view of an alternative embodiment of TSU 300, taken generally from line 234-234 of FIG. 9, whereby inner members 312 are offset towards axis 350. Such an arrangement maximizes total thermal energy extraction from the extremities of the TSU. FIG. 24 is a cross-sectional view of another alternative embodiment of TSU 300, taken generally from line 234-234 of FIG. 9, whereby inner members 312 are offset away from axis 350. Such an arrangement maximizes total thermal energy extraction from the center of the TSU.

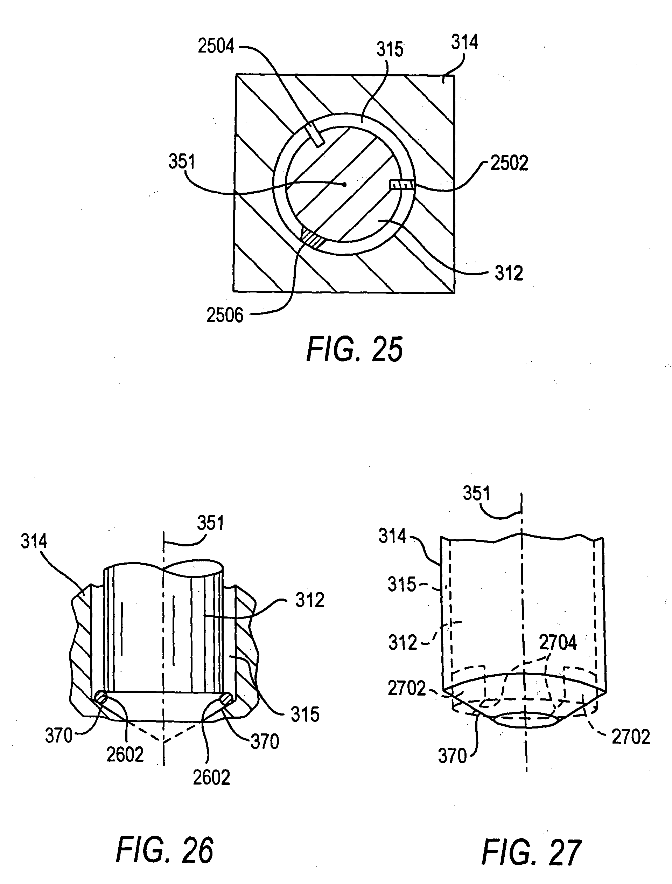

Centering, offsetting or tilting inner member 312 as shown in FIGS. 14-21 may be achieved by adding features such as the ones shown in FIG. 25, which is another cross-sectional view of the portion of FIG. 14, taken generally from line 15-15 of FIG. 14. Such features may be added to either the outer surface of inner member 312 or the inner surface of outer member 314 at desired location(s) along axis 351, in order to control the radial position of inner member 312 with respect to outer member 314. Such features may include inserting threaded studs 2502, such as set screws, pressed pins 2504, weld beads 2506 or any other appropriate fixture. Adding such features may help maintain the position of inner member 314 within outer member 314 and reduce variability among different TSUs.

Other features, such as the ones shown in FIGS. 26-28, may be added to prevent or reduce fluid flow blockage at the inlet or outlet of an annular channel or at the various transverse flow channels in TSU 300. Reducing fluid flow blockage reduces flow and pressure variations that may result from inner members 312 potentially coming in direct contact with different portions of TSU 300. This may be due to positioning of inner member 312 or due to movement of inner member 312 in a direction along or parallel to axis 351 prior to or during fluid flow.

The features shown in FIGS. 26 and 27 may be provided to prevent fluid flow blockage resulting from inner member 312 coming in contact with outer member 314 close to one end of TSU 300. In certain embodiments, as described above, annular channel 315 may be formed by drilling a hole through a manifold forming outer member 314 and inserting inner member 312 therein. As can be seen in FIGS. 26 and 27, the end of outer member 314 may include conical surface 370, which may have a conical shape resulting from such drilling. The features shown in FIG. 28 may be added to prevent fluid flow blockage resulting from inner member 312 coming in contact with drilled plug 2802 at another end of TSU 300. This end of TSU 300 may correspond to the entry point of drilling of the manifold in order to form the hole through which inner member 312 may be inserted.

FIG. 26 is a partial sectional view of a portion of TSU 300, taken generally from line 26-26 of FIG. 9. FIG. 26 shows elements 2602, which may include a bead or pin that is mounted, or a tab that is welded, to inner member 312 or outer member 314. FIG. 27 is a partial perspective view of a portion of another embodiment of TSU 300. FIG. 27 shows features which may be realized by cutting away or removing portions 2702 from inner member 312. Portions 2702 may be circular segments defined by each of parallel chords 2704. Accordingly, inner member 312 may locally rest on outer member 314 at surface 370.

FIG. 28 is a partial sectional view of a portion of TSU 300, taken generally from line 28-28 of FIG. 9. FIG. 28 shows features which may include welding tab 2804 to inner member 312 or outer member 314, or may include mounting pin 2806 on inner member 312 or on drilled plug 2802, or adding any other appropriate fixture. Accordingly, adding features such as the ones depicted in FIGS. 25, 26 and 28 may restrict movement of inner member 312 in a direction transverse to or parallel to longitudinal axis 351.

Alternatively, features to prevent fluid flow blockage may include machining, forging or welding the ends of inner member 312, or using any other appropriate method in order to maintain a gap between inner members 312 and outer member 314 or drilled plug 2802 discussed in connection with FIGS. 26-28. Preferably, none of the aforementioned features annularly surround inner member 312. Instead, these features preferably create more gaps allowing fluid to flow more freely than it would had such features not been included.

As discussed above, TSU 300 allows for various fluid routing arrangements that enable retrieving fluid from the same end it is supplied. Allowing for various fluid routing arrangements also provides more flexibility in choosing optimum piping connections to TSU 300 in order to supply and retrieve fluid to and from the TSU. This aspect is further enhanced by the existence of transverse members 330, which allow for making piping connections to the side of TSU 300. Examples of such piping configurations are illustrated in FIGS. 30-34.

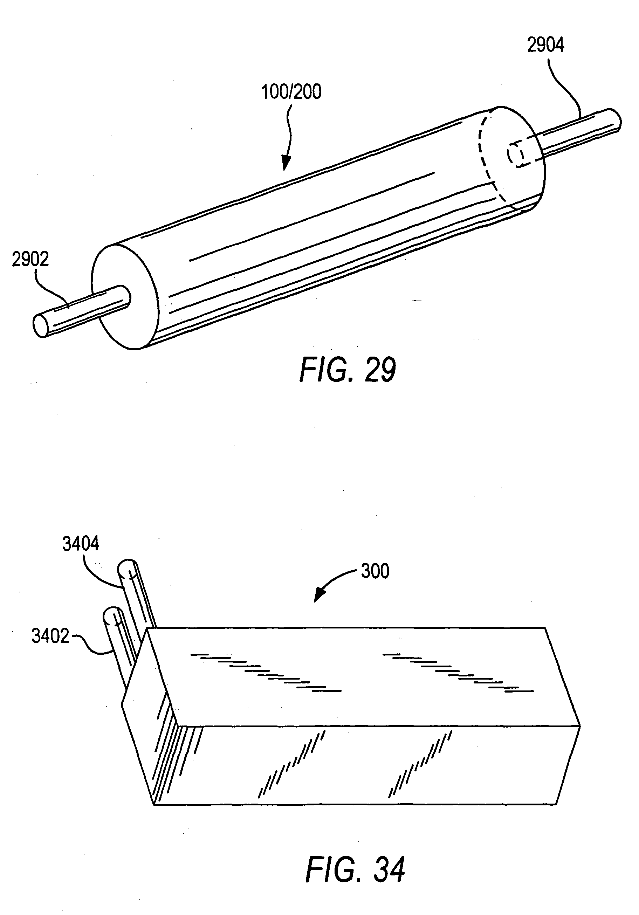

FIG. 29 illustrates pipes 2902 and 2904 being mounted to opposite ends of TSU 100 or TSU 200 of FIGS. 3 and 6 for delivering and retrieving fluid to and from the TSU. Because each of TSU 100 and TSU 200 allows for a single-pass fluid flow arrangement, fluid may not be retrieved from the same end it is supplied. In contrast, FIGS. 30-34 illustrate piping connections being mounted to the same end and/or to the side(s) of TSU 300, due to the mutli-pass arrangements made possible by the way TSU 300 is designed.

For example, FIG. 30 illustrates a piping arrangement whereby pipes 3002 and 3004 may be mounted to one end of TSU 300, such that they are coupled to diagonally-spaced (non-adjacent) annular channels. This piping arrangement may be suitable for the two-pass/two-path fluid flow arrangement of FIG. 11. More specifically, inlet pipe 3002 of FIG. 30 may be coupled to channel 315a of FIG. 11, for supplying fluid to TSU 300, whereas outlet pipe 3004 of FIG. 30 may be coupled to channel 315c of FIG. 11, for retrieving fluid from TSU 300.

As another example, FIG. 31 illustrates a piping arrangement whereby pipes 3102 and 3104 may be mounted to one end of TSU 300, such that they are coupled to adjacent annular channels. This piping arrangement may be suitable for the four-pass/one-path fluid flow arrangement of FIG. 12. More specifically, inlet pipe 3102 of FIG. 31 may be coupled to channel 315a of FIG. 12, for supplying fluid to TSU 300, whereas outlet pipe 3104 of FIG. 31 may be coupled to channel 315d of FIG. 12, for retrieving fluid from TSU 300.

An alternative piping arrangement to that of FIG. 31 may also be suitable for a two-pass/two-path fluid flow arrangement similar to the one shown in FIG. 11. More specifically, inlet pipe 3102 of FIG. 31 may be coupled to channel 315a of FIG. 11, for supplying fluid to TSU 300, whereas outlet pipe 3104 of FIG. 31 may be coupled to channel 315b of FIG. 11, for retrieving fluid from TSU 300. By coupling outlet pipe 3104 to channel 315b instead of 315c, the fluid flow arrangement of FIG. 11 may be modified such that fluid flowing through channel 315c may subsequently flow through one transverse member towards channel 315b, as opposed to having fluid from channel 315b be directed through that same transverse member towards channel 315c.

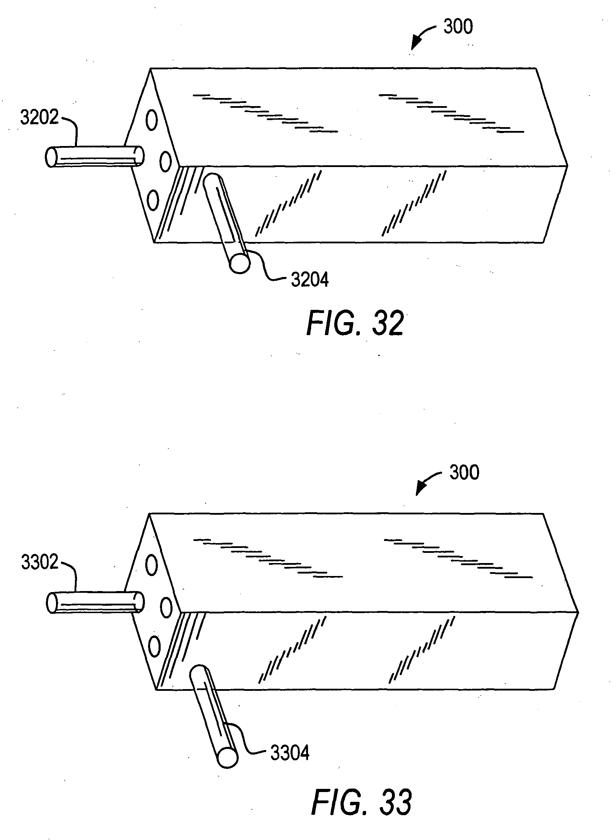

As yet another example, FIG. 32 illustrates a piping arrangement whereby pipe 3202 may be mounted to one end of TSU 300 and pipe 3204 may be mounted to one side of TSU 300, such that they are coupled to diagonally-spaced annular channels. This piping arrangement may also be suitable for the two-pass/two-path fluid flow arrangement of FIG. 11. More specifically, inlet pipe 3202 of FIG. 32 may be coupled to channel 315a of FIG. 11, for supplying fluid to TSU 300, whereas outlet pipe 3204 of FIG. 32 may be coupled to channel 315c of FIG. 11 for retrieving fluid from TSU 300. Alternatively, inlet pipe 3202 may be mounted to the other side of TSU 300 and coupled to channel 315a. Also, outlet pipe 3204 may be mounted to the same end of TSU 300 and coupled to channel 315c.

As yet another example, FIG. 33 illustrates a piping arrangement whereby pipe 3302 may be mounted to one end of TSU 300 and pipe 3304 may be mounted to one side of TSU 300, such that they are coupled to adjacent annular channels. This piping arrangement may also be suitable for the four-pass/one-path fluid flow arrangement of FIG. 12. More specifically, inlet pipe 3302 of FIG. 33 may be coupled to channel 315a of FIG. 12, for supplying fluid to TSU 300, whereas outlet pipe 3304 of FIG. 33 may be coupled to channel 315d of FIG. 12, for retrieving fluid from TSU 300. Alternatively, inlet pipe 3302 may be mounted to the other side of TSU 300 and coupled to channel 315a. Also, outlet pipe 3304 may be mounted to the same end of TSU 300 and coupled to channel 315d.

An alternative piping arrangement to that of FIG. 33 may also be suitable for a two-pass/two-path fluid flow arrangement similar to the one shown in FIG. 11. More specifically, inlet pipe 3302 of FIG. 33 may be coupled to channel 315a of FIG. 11, for supplying fluid to TSU 300, whereas outlet pipe 3304 of FIG. 33 may be coupled to channel 315b of FIG. 11 through a transverse member 330, for retrieving fluid from TSU 300. By coupling outlet pipe 3304 to channel 315b instead of channel 315c, the fluid flow arrangement of FIG. 11 may be modified such that fluid flowing through channel 315c may subsequently flow through one transverse member towards channel 315b, as opposed to having fluid from channel 315b be directed through that same transverse member towards channel 315c.

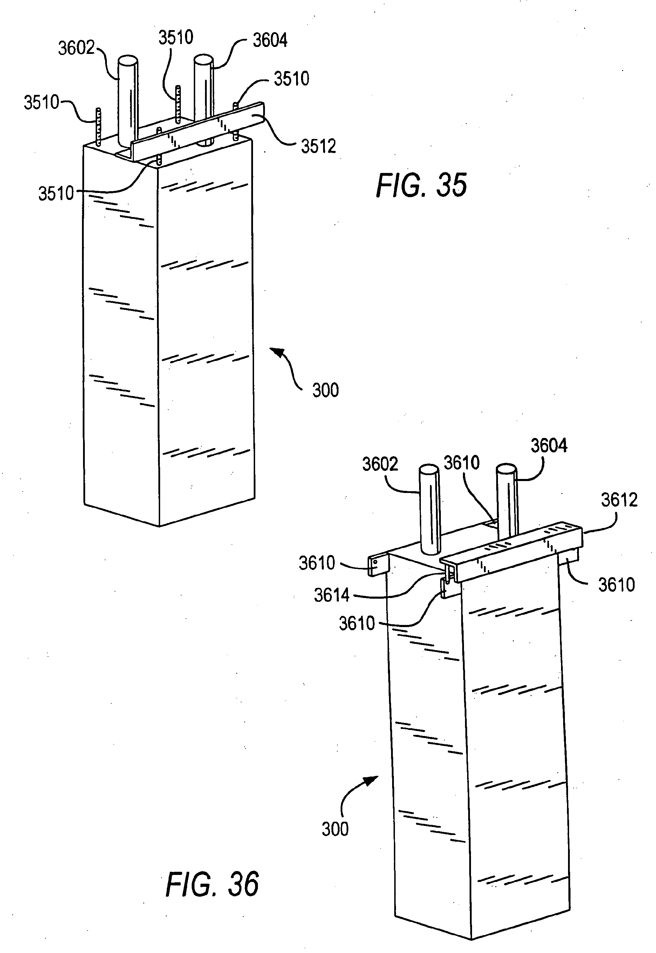

As yet another example, FIG. 34 illustrates a piping arrangement whereby pipe 3402 may be mounted to one side of TSU 300 and pipe 3404 may be mounted to the same side of TSU 300, such that they are coupled to adjacent annular channels. This piping arrangement may also be suitable for a two-pass/two-path fluid flow arrangement similar to the one shown in FIG. 11. More specifically, inlet pipe 3402 of FIG. 34 may be coupled to channel 315a of FIG. 11, for supplying fluid to TSU 300, whereas outlet pipe 3404 of FIG. 34 may be coupled to channel 315b of FIG. 11, for retrieving fluid from TSU 300. By coupling outlet pipe 3404 to channel 315b instead of channel 315c, the fluid flow arrangement of FIG. 11 may be modified such that fluid flowing through channel 315c may subsequently flow through one transverse member towards channel 315b, as opposed to having fluid from channel 315b be directed through that same transverse member towards channel 315c.

As illustrated by some of the examples discussed in connection with FIGS. 30-34, any combination of end and side piping connections may be used depending on the desired fluid routing arrangement and the manner by which TSU 300 is to be mounted, installed or oriented in a thermal and compressed air storage system or other system. The foregoing piping arrangements are only illustrative of the principles of the present invention. Various modifications and piping arrangements can be implemented by those skilled in the art without departing from the scope and spirit of the invention.

Like TSUs 100 and 200, TSU 300 may be heated to a desired temperature by heating inner and/or outer members 312 and 314 through radiation, by placing one or more heating rods into one or more cavities extending through at least a portion of or the entire length or width of TSU 300, or by any method or apparatus disclosed in U.S. patent application No. 10/943,639, filed September 17, 2004, which is hereby incorporated by reference herein in its entirety, or by any other suitable method or apparatus.

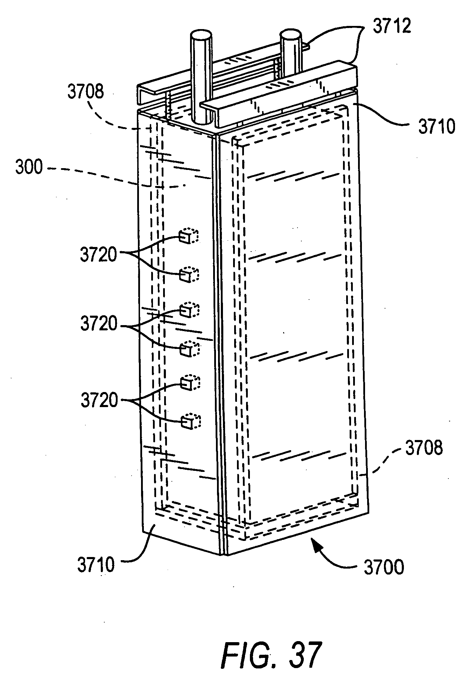

Heating a TSU, especially for extended time periods at elevated temperatures, may result in dissipation of thermal energy through its walls in the form of heat. To counter such heat loss, insulating material may be coupled to the outer surface of the unit, as can be seen in FIG. 37.

For example, insulating material fabricated in single or multiple layers with stepped interfaces between adjacent faces may be used. Effective insulation material would not corrode or degrade significantly over time. Preferably, such material may be inert, such as ceramic microporous material. Moreover, such material may be in either pressed rigid board form or fabric-coated stitched form, having thermal conductivities ranging from 0.023 W/m-K to 0.050 W/m-K. The thickness of such high efficiency insulation material need not be considerable to attain a substantial reduction in heat loss. Therefore, not only does a TSU surrounded by or coated with such material benefit from a reduction in heat loss, which reduces the cost of maintaining a TSU, using such material does not result in a significant increase in the volume of the unit. This, in turn, does not substantially affect packaging, transporting and storing of the unit negatively.

Heating a TSU may also lead to thermal growth due to the expansion of the materials used to fabricate it. This may have harmful effects on the system in which the unit is used. For example, axial expansion of a unit having piping connections on opposite ends to a thermal storage system may strain or stress and therefore fracture such piping connections.

One way to avoid such effects is to design the TSU such that piping connections to other portions of the system need not be made on opposite ends of the unit. As evidenced by the discussion relating to FIGS. 30-34, TSU 300 exhibits such characteristics. If the inlet and outlet pipes are coupled to the same end, the opposite end may remain unsecured, thereby allowing for unrestrained growth of the TSU that does not impact the inlet and outlet pipes nor does it impact the system in which it is used.

Moreover, features, such as the ones illustrated in FIGS. 35-36 may be added to the TSU to help limit the impact of thermal expansion of the piping connections coupled to the TSU. Such features may include coupling threaded rods 3510 to TSU 300, as shown in FIG. 35. A pair of threaded rods 3510 may be coupled to beam 3512. Beam 3512 may include an "I" section, a "C" channel section, a rectangular section or an angle section for mounting TSU 300 to a support structure. The other pair of threaded rods 3510 may also be coupled to another beam for mounting in order to provide further support for TSU 300. Alternatively, other features may be used, such as welding tabs 3610 to TSU 300, as shown in FIG. 36. A pair of tabs 3610 may be coupled to bushings 3614 which are coupled to beam 3612. Beam 3612 may include an "I" section, a "C" channel section, a rectangular section or an angle section for mounting TSU 300 to a support structure. The other pair of tabs 3610 may be coupled to bushings and another beam for mounting in order to provide further support for TSU 300.

TSU 300 may be mounted to a support structure in order to minimize the impact of thermal growth of outlet pipe 3604 which may heat substantially. By mounting TSU 300 to a support structure close to the end of TSU 300 where the inlet and outlet pipes 3602 and 3604 are situated, the outlet pipe may grow in a direction away from the TSU and opposite to the direction of growth of the TSU, thereby allowing for unrestrained growth of the outlet pipe that does not impact TSU 300. TSU 300 may be coupled to the support structure through any of fixtures depicted in FIGS. 35 and 36 or through any other appropriate fixtures. The support structure may be coupled to TSU 300 and sized to meet load requirements at elevated temperatures. Such a support structure may be integrated into the frame of the system the TSU is used in or may be self-supporting.

FIG. 37 shows self-supporting structure 3700. Using a self-supporting structure may facilitate fabricating the unit and treating it as a separate component for packaging purposes. A self-supporting design also provides: a structure to support the insulation 3708 coupled to TSU 300, an envelope, such as metallic sheets 3710, to protect insulation 3708 from incidental damage, and a mounting surface for any heating rods that may be placed into apertures 3720 for heating TSU 300. Self-support structure 3700 may also include beams 3712 for optionally mounting TSU 300 to another supporting structure for further support. Shipping restraints (not shown) may be integrated in the base of the self-supporting design in order to limit the movement of the unit during pre-installation handling of the assembled unit and shipment of a completed system, such as a thermal and compressed air storage (TACAS) system, in which the unit may be used.

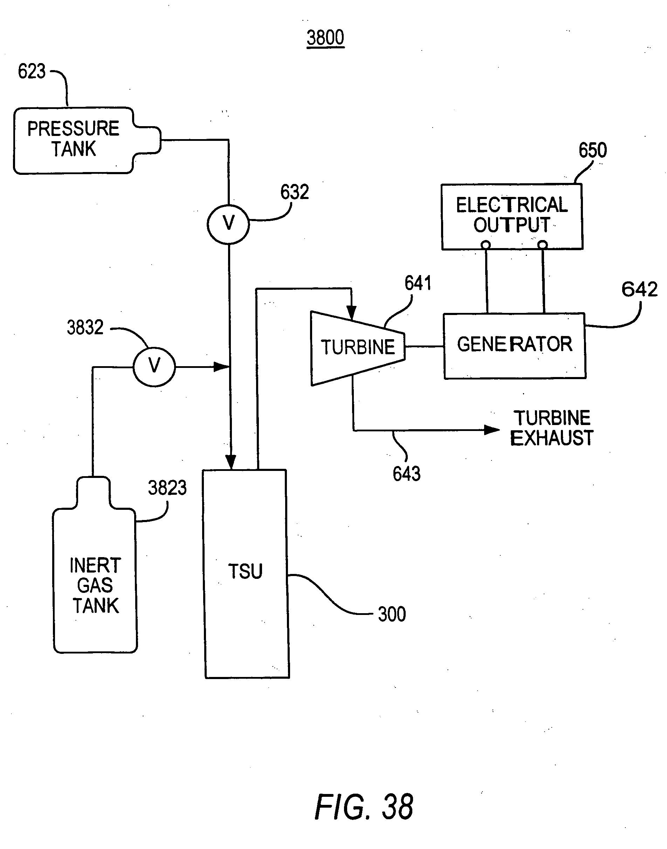

FIG. 38 shows TACAS system 3800 for providing output power utilizing TSU 300 of FIGS. 9 and 10, described above. TSU 300 may be mounted or installed in TACAS system 3800. For example, TSU 300 may be coupled to a support structure that may be integrated into TACAS system 3800 or that may be self-supporting, as shown in FIG. 37. Similar to FIG. 8, FIG. 38 may represent a backup energy system that provides backup power to a load in the event of a disturbance in the supply of power from another power source.

Similar to TACAS system 600 of FIG. 8, TACAS system 3800 includes storage or pressure tank 623, valve 632, TSU 300, electrical input 610, turbine 641, which is coupled to turbine exhaust 643, generator 642 and electrical output 650. When electric power is needed from system 3800, compressed air from pressure tank 623 may be routed through valve 632 to TSU 300. TSU 300 may heat the compressed air before providing it to turbine 641. TSU 300 may be heated, and its temperature controlled, by any method discussed in connection with FIG. 8. When driven by the hot air supplied to it, turbine 641 may drive electrical generator 642, which produces electric power and provides it to electrical output 650.

TACAS system 3800 benefits from the advantages discussed in connection with TACAS system 600. Moreover, because TSU 300 is coupled to other components of TACAS system 3800 such that piping connections to the other components are made on the same end of TSU 300, the opposite end of TSU 300 may remain unsecured. As described above, this limits or avoids the negative impact of thermal expansion on the piping connections and on TACAS system 3800.

TACAS system 3800 also includes gas tank 3823 and valve 3832. Gas tank 3823 may contain a pressurized inert purge gas. After electric power is needed from system 3800, and compressed air from pressure tank 623 is routed to TSU 300, heated and provided to turbine 641, valve 3832 may be actuated such that the inert gas is routed from gas tank 3823 to TSU 300. The inert gas may be used to purge and replace some or all of the air present in TSU 300. Valve 3832 may be used to control the portion of inert gas supplied to TSU 300, thereby modifying the ratio of inert gas to air in TSU 300. Preferably, gas tank 3823 may contain an inert gas that is heavier than air, such as argon. TSU 300 may be oriented such that the piping connections to other components of TACAS system 3800 are above the body of TSU 300, thereby allowing gravity to assist the purge gas to displace the air in TSU 300 and remain in TSU 300.

The benefit of using an inert gas to purge the air in TSU 300 is the prevention of oxidation that could cause fouling of the flow channels in the TSU. Fouling refers to the build-up of an oxide residue layer on the internal surfaces of the flow channels, thereby partially or completely blocking the flow channels and degrading performance. High temperature operation increases the rate of oxidation in the flow channels. Accordingly, fouling may be prevented by lowering the operating temperature which would require a larger TSU for the system to operate efficiently. This, in turn, may lead to increased manufacturing, packaging, transporting and storing costs relating to the TSU. Alternatively, occasionally substituting an inert gas for air in a TSU reduces the rate of oxidation in the TSU's flow channels. Therefore, implementing a purge gas system in a thermal and compressed air system, or any other system that utilizes a TSU, may be a more desirable alternative.

The present invention was presented in the context of industrial backup utility power. The present invention may be alternatively implemented in a continuously operating electrical generation system such as a continuously operating TACAS system. Such a system may use a compressor that constantly provides compressed air to a TSU that may be continuously heated to ensure that the air is sensibly heated before being provided to a constantly operating turbine.

Alternatively, the present invention may be used in any application associated with generating power, such as in thermal and solar electric plants. Furthermore, the present invention may be used in any other application where thermal storage, fluid heating or heated fluid delivery may be desirable.

The above described embodiments of the present invention are presented for purposes of illustration and not of limitation, and the present invention is limited only by the claims which follow.

## Claims

1. A thermal storage unit having a longitudinal axis, said unit comprising:
an annular flow channel disposed about an axis parallel to the longitudinal axis, said channel being formed between an inner cylindrical surface of a first member and an outer cylindrical surface of a second member, said outer cylindrical surface having a diameter smaller than said inner cylindrical surface;
a tubular inlet coupled to one end of said channel, said inlet for providing fluid to said channel; and
a tubular outlet coupled to the other end of said channel.

2. The thermal storage unit of claim 1, wherein each of said first and second members comprises thermal storage material.

3. The thermal storage unit of claim 2, wherein said thermal storage material comprises a solid mass.

4. The thermal storage unit of claim 3, wherein said solid mass is iron, aluminum, or steel.

5. The thermal storage unit of any one of claims 1 to 4 further comprising at least one heat source for heating said members.

6. The thermal storage unit of claim 5, wherein said at least one heat source comprises an external radiant heater, an internal radiant heater, and / or a resistive heater.

7. The thermal storage unit of claim 5 or 6, wherein said at least one heat source comprises induction heating circuitry for causing current to circulate through said first and second members, whereby the circulating current heats said members.

8. The thermal storage unit of claim 5, 6 or 7, wherein said at least one heat source is coupled to control circuitry, said control circuitry for controlling said at least one heat source to maintain said unit at a predetermined temperature.

9. The thermal storage unit of any one of claims 1 to 8, wherein said axis parallel to said longitudinal axis comprises said longitudinal axis.

10. The thermal storage unit of any one of claims 1 to 9, wherein said annular flow channel is a first annular flow channel, said axis parallel to said longitudinal axis is a first axis, said inner cylindrical surface of said first member is a first inner cylindrical surface, said thermal storage unit further comprising a second annular flow channel disposed about a second axis parallel to said longitudinal axis, said second channel being formed between a second inner cylindrical surface of said first member and an outer cylindrical surface of a third member, said outer cylindrical surface of said third member having a diameter smaller than said second inner cylindrical surface.

11. The thermal storage unit of claim 10, wherein said diameters of said outer cylindrical surfaces of said second and third members are substantially equal.

12. The thermal storage unit of claim 10 or 11, wherein said first and second inner cylindrical surfaces have diameters that are substantially equal.

13. A backup energy system comprising:
the thermal storage unit of any one of claims 1 to 12 for heating a fluid;
a turbine coupled to said thermal storage unit for receiving said heated fluid, said received heated fluid driving said turbine; and
an electrical generator for providing power when said turbine is driven by said heated fluid.

14. The backup energy system of claim 13 further comprising a heating system for heating said thermal storage unit.

15. The backup energy system of claim 14 further comprising control circuitry coupled to said heating system and said thermal storage unit, said control circuitry for controlling said heating system to maintain said thermal storage unit at a predetermined temperature.

16. The system of claim 13, 14 or 15, wherein said fluid is compressed air, said backup energy system further comprising a compressed air system to provide said compressed air to said thermal storage unit.

17. The backup energy system of claim 16, wherein said compressed air system is a storage tank that contains said compressed air.

18. The system of claim 13, 14, 15, or 16, further comprising a bypass valve coupled to said thermal storage unit, said bypass valve for controlling a portion of said fluid provided to said thermal storage unit.

19. A method for using a thermal storage unit in a backup power delivery system that uses fluid to provide electrical power, the method comprising:
preheating first and second members of said unit to a predetermined temperature;
providing fluid to said unit in the event of failure of a primary power source;
heating said fluid as said fluid passes through an annular channel that is formed between said first and second members; and
using said heated fluid to drive a turbine, which drives an electrical generator to provide electrical power.

20. The method of claim 19 further comprising controlling application of heat to said first and second members to maintain said thermal storage unit at a predetermined temperature.
